Europäisches Patentamt

European Patent Office

Office européen des brevets

(19)

(11) Veröffentlichungsnummer: **0 029 564**
**A1**

(12) # EUROPÄISCHE PATENTANMELDUNG

(21) Anmeldenummer: **80107111.9**

(22) Anmeldetag: **17.11.80**

(51) Int. Cl.³: **B 01 D 53/34**
**B 01 J 19/10**

(30) Priorität: **23.11.79 DE 2947184**

(43) Veröffentlichungstag der Anmeldung:
**03.06.81 Patentblatt 81/22**

(84) Benannte Vertragsstaaten:
**AT BE CH DE FR GB IT LI LU NL SE**

(71) Anmelder: **MANNESMANN VEBA UMWELTTECHNIK GMBH**
**Südstrasse 41**
**D-4690 Herne 2(DE)**

(72) Erfinder: **Riemann, Hanns-Helmut**
**Schattbachstrasse 26**
**D-4630 Bochum(DE)**

(72) Erfinder: **Sonnenschein, Hans**
**Hatzperbogen 48**
**D-4300 Essen 1(DE)**

(72) Erfinder: **Michel, Erich, Dr.**
**Eichendorffstrasse 16**
**D-4358 Haltern(DE)**

(74) Vertreter: **Krug, Joachim, Dr.**
**Möllerstrasse 58**
**D-4390-Gladbeck(DE)**

(54) **Verfahren zum Heraustrennen von gasförmigen Bestandteilen aus einem Gasstrom, insbesondere Rauchgasstrom.**

(57) Zum Heraustrennen von gasförmigen Bestandteilen aus einem Gasstrom, insbesondere Rauchgasstrom, mit Eindüsen eines Absorptionsmittels wie Kalkpulver in den Gasstrom wird dieser einem Schallfeld ausgesetzt. Hierdurch werden die Pulverteilchen in Schwingungen versetzt und erfahren durch gegenseitige Stoßberührung eine Oberflächenveränderung und damit eine höhere Effizienz.

EP 0 029 564 A1

– 1 –

Verfahren zum Heraustrennen von gasförmigen Bestandteilen aus einem Gasstrom, insbesondere Rauchgasstrom

Die Erfindung betrifft ein Verfahren zum Heraustrennen von gasförmigen Bestandteilen aus einem Gasstrom, insbesondere von Schadstoffen wie $SO_2$, HCl und/oder HF aus einem Rauchgasstrom, durch Eindüsen eines Absorptionsmittels.

Bei einem derartigen bekannten Verfahren wird für die Erzielung einer jeweils ausreichenden Trennwirkung eine bestimmte Menge des Absorptionsmittels benötigt. Um diese Menge klein zu halten, kommt es auf eine über den Kanalquerschnitt im Sinne der Strömungsgesetze gleichmäßige Verteilung des pulverförmigen Absorptionsmittels sowie auf eine Mindestlänge des Strömungskanales und auf eine gute Verwirbelung der Strömung an. Die Reaktionsgeschwindigkeiten bei Gas-Feststoffreaktionen hängen einesteils von der Diffusionsgeschwindigkeit der zu bindenden Gaskomponente und anderenteils von der Relativgeschwindigkeit zwischen den Gasmolekülen und den Pulverteilchen ab. Die Reaktionsgeschwindigkeit nimmt beim Flug der Pulverteilchen durch den Strömungskanal hindurch insoweit ab, als sich deren Oberfläche sättigt und die Durchlässigkeit nach innen verringert. Die Relativgeschwindigkeit der Pulverteilchen zum Gas nimmt beim Flug ebenfalls ab, weil diese durch Aufnahme oder Abgabe kinetischer Energie rasch den Zustand von Schwebeteilchen annehmen. Eine Vergrößerung der Mindestlänge des Strömungskanals hat durch diese beiden Einflüsse keine entsprechende Reaktionsverbesserung zur Folge.

Auch der Einbau von Strömungsschikanen in den Strömungskanal hat nur eine eng begrenzte Wirkung.

Man hat vorgeschlagen (DE-OS 26 17 053), in dem Strömungskanal in Abständen hintereinander mehrere Eindüsstellen anzuordnen und die Eindüsgeschwindigkeiten verschieden groß einzustellen. Dies hat im wesentlichen nur die Wirkung, bereits oberflächengesättigte Pulverteilchen im Zuge des Gasstromes durch frische zu ersetzen, was zur Folge hat, die Mindestlänge des Strömungskanals zu vergrößern. Die Reaktionseigenschaften der einzelnen Pulverteilchen in Bezug auf die jeweils benachbarten Gasmoleküle werden bei diesem Verfahren nicht verändert.

Die Erfindung bezweckt, ein Verfahren der eingangs bezeichneten Art zu schaffen, bei dem ohne Vergrößerung der Mindestlänge des Strömungskanals die Reaktionen zwischen den einzelnen Pulverteilchen und dem Gas verbessert werden, so daß entweder der Reinigungseffekt bei derselben Pulvermenge erhöht wird oder bei unverändertem Reinigungsgrad nur noch eine kleine Menge des Absorptionsmittels benötigt wird. Mit der Verkleinerung der Pulvermenge verkleinert sich überdies anlagemäßig die nachgeschaltete Filtereinrichtung. Dabei richtet sich die Erfindung auf ein bevorzugtes Anwendungsgebiet, nämlich auf die Entfernung der Schadstoffe wie schweflige Säure, Salzsäure und/oder Fluorwasserstoff aus Rauchgasen. Auf Schadstoffbeseitigung mit möglichst niedrigem Aufwand kommt es dort besonders an.

Diese Aufgabe wird dadurch gelöst, daß der Gasstrom hinter der Eindüsstelle des Strömungskanals einem Schallfeld derart ausgesetzt wird, daß die Pulverteilchen in Schwingung versetzt werden und durch gegenseitige Stoßberührung eine Oberflächenveränderung erfahren.

Bei Abgasen von Verbrennungsmotoren ist an sich bekannt (US-PS 3,201,338), einen feststofffreien Gasstrom einem in dem Strömungskanal erzeugten Schallfeld auszusetzen und dadurch die Gasmoleküle zur besseren Durchmischung in unterschiedliche Schwingungen zu versetzen. Ferner ist die Einwirkung eines Schallfeldes auf Feststoffteilchen an sich bekannt, nämlich zur Schnellreinigung von Dampfkesseln, wobei Asche- oder Rußteilchen, die sich auf den Heizflächen abgesetzt haben, in sich selbst aktiviert und von der Heizfläche gelöst werden. Im wesentlichen dadurch und kaum durch Schallvibrationen der Heizflächen fallen diese Pulverteilchen zu Boden. Die hierzu verwendeten Schallerzeuger entsprechen den in der Schiffahrt gebräuchlichen "Nebelhörnern", jedoch sind sie hitzefest ausgebildet und angeordnet.

Mit Hilfe des erfindungsgemäßen Verfahrens wird die Relativgeschwindigkeit des einzelnen Pulverteilchens in Bezug auf das unmittelbar umgebende Gasvolumen im Bereich des Schallfeldes vehement immer wieder erneuert. Da die Pulverteilchen in dem Schallfeld, das aus Grund- und Obertönen besteht und durch Reflexionen an den Wandungen des Strömungskanals ganz ungleichmäßig ist, untereinander in jedem Zeitpunkt verschiedenartigen Beschleunigungs- und Verzögerungskräften ausgesetzt sind, prallen sie während des Fluges häufig gegeneinander. Sie verformen dadurch plastisch ihre Oberfläche und/oder spalten auf. Hierdurch bieten sich für den Diffusionsablauf fortwährend frische Oberflächenbereiche an. Das ist die zugleich erzielte, fortlaufende Vergrößerung der aktiven Oberfläche der Pulverteilchen.

Patentanspruch:

Verfahren zum Heraustrennen von gasförmigen Bestandteilen aus einem Gasstrom, insbesondere von Schadstoffen wie $SO_2$, HCl und/oder HF aus einem Rauchgasstrom, durch Eindüsen eines Absorptionsmittels, wie Kalkpulver, in den Strömungskanal und anschließendem Herausfiltern, d a d u r c h  g e - k e n n z e i c h n e t ,  daß der Gasstrom hinter der Eindüsstelle des Strömungskanals einem Schallfeld derart ausgesetzt wird, daß die Pulverteilchen in Schwingung versetzt werden und durch gegenseitige Stoßberührung eine Oberflächenveränderung erfahren.

Europäisches
Patentamt

**EUROPÄISCHER RECHERCHENBERICHT**

Nummer der Anmeldung

EP 80 10 7111

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | B 01 D 53/34 B 01 J 19/10 |
| | DE - A - 1 442 685 (FORSCHUNGSIN-STITUT F. WILLEMS) * Seite 16, Ansprüche 1,2 * -- | 1 | |
| A | FR - A - 2 279 443 (ASAHI FIBER GLASS) | | |
| A | DE - A - 1 467 534 (ROSE DOWNS & THOMPSON) | | |
| A | DE - A - 2 712 782 (GTS) ---- | | |

RECHERCHIERTE
SACHGEBIETE (Int. Cl.³)

B 01 D 53/00
B 01 J 19/00

KATEGORIE DER
GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-02-1981 | BOGAERTS |

EPA form 1503.1 06.78